# EUROPEAN PATENT APPLICATION

(11) **EP 1 462 009 A1**
(43) Date of publication of application: **29.09.2004**
(21) Application number: 03075839.5
(22) Date of filing: 24.03.2003
(51) Int. Cl.: A23G 1/20, A23G 3/02

(54) **Apparatus for making chocolate articles**

(71) Applicant: AASTED-MIKROVERK APS, 3520 Farum (DK)
(72) Inventor: Carlsen, Soren Michael, 3390 Hundested (DK)
(74) Representative: Heiden, Finn

(57) **Abstract**

Apparatus for making articles of chocolate-like mass, in particular chocolate mass, comprising moulding surfaces onto which deposited mass (15,16) is solidified as well as a depositor with at least one depositing nozzle (10). The nozzle (10) comprises one depositing channel (13) with a worm or screw-shaped insert (14) parting the channel (13) in at least two separate flow channels for a mass (15,16). The one depositing channel (13) is connected with at least two different sources of mass to be deposited. Articles with an appearance of mixed masses such as a marbled look is then created.

## Description

The present invention concerns the making of chocolate articles by depositing chocolate or chocolate-like mass.

Generally, chocolate-like masses are suspensions of non-fat particles such as sugar, milk powders and cocoa solids mixed up with a liquid fat constituent. Often the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

However, for the chocolate or chocolate-like masses to be used by the present invention it is decisive, that whether the fat phase constitutes of genuine cocoa butter or substitutes therefore, that the fat phase is capable of being flowable through a depositors nozzles and thereby being deposited, for example down into a mould cavity or directly onto a conveyor surface for further treatment.

By the inventive apparatus at least two different masses are mixed in a certain manner when they are deposited.

The two or more masses are flowing simultaneously through the depositor nozzle and is mixed more or less intensively when leaving the nozzle, depending on the pitch of the insert or channels thereof.

Typically two masses of different colours are deposited and mixed so that the ready article exhibits an exclusive appearance of two more or less intermixed, coloured masses. Advantageously the one mass is a milk chocolate type and the other mass is a dark chocolate type.

Advantageously, one type of chocolate mass could be mixed with a different type of mass, such as non-chocolate mass being an ingredients mass. Also the one mass could be genuine chocolate mass and the other mass being mixed therewith could be a chocolate-like mass type comprising substitutes for cocoa butter.

When being deposited into mould cavities, then optionally, the mould plates may then be shaken for obtaining a more even distribution of the deposited chocolate mass.

Before being deposited the chocolate masses is typically undergoing a tempering process. The purpose of the tempering process is to bring the mass into a liquid, flowable state containing crystal seeds, which when the chocolate has been deposited solidifies into the desirable βV or βIV type crystals, thereby providing a high quality chocolate article.

The inventive apparatus is typically used for moulding a solid chocolate article in a mould cavity in one piece, such as a table, tablet, slab or bar.

Also it could be used for pressing a bar or bar-like article in one piece by depositing a lump mass directly onto a conveyor surface and then subjecting the mass to a press from a plunger.

Also it could be used for the pressing of a shell or shell-like article in a mould cavity.

The inventive apparatus could also be used for making an secondary chocolate layer on pre-made articles, for example by depositing tempered chocolate-like mass into or onto an already made shell, optionally shaking the moulds, and then immersing cold plungers into the deposited mass for making shells with predetermined and even thickness.

The first pre-made shell could be of one chocolate type such as ordinary milk chocolate and the inner chocolate layer made subsequently then exhibits an exclusive look of intermixed chocolate types.

After the shells made are solidified, they could be filled with a centre mass of a creamy or liquid food material, which differs from that of the shell material. The centre mass could be an alcohol containing mass, a sugar containing mass or a creamy fondant mass, simply any of the centre masses known to the chocolate industry. Finally, a chocolate covering layer may be deposited by the inventive depositor for closing the centre mass off thereby creating a complete article known as a "praline".

The invention is explained further below by reference to preferred embodiments as well as the drawing, in which
fig. 1 is a schematical perspective view of the apparatus according to the invention, depicted as part of a production plant
fig. 2 is schematical perspective view of another embodiment depicted as part of a production plant,
fig. 3 is a schematical, partial sectional view of a single inventive depositing nozzle comprised by the depositors of figure 1 or 2,
fig. 4 is another embodiment of the nozzle depicted in figure 3,
fig. 5 is a schematical, perspective view of a third embodiment of an inventive nozzle, and
fig. 6 and 7 depicts chocolate articles made by two differently mixed chocolate types deposited by the nozzle of figure 3.

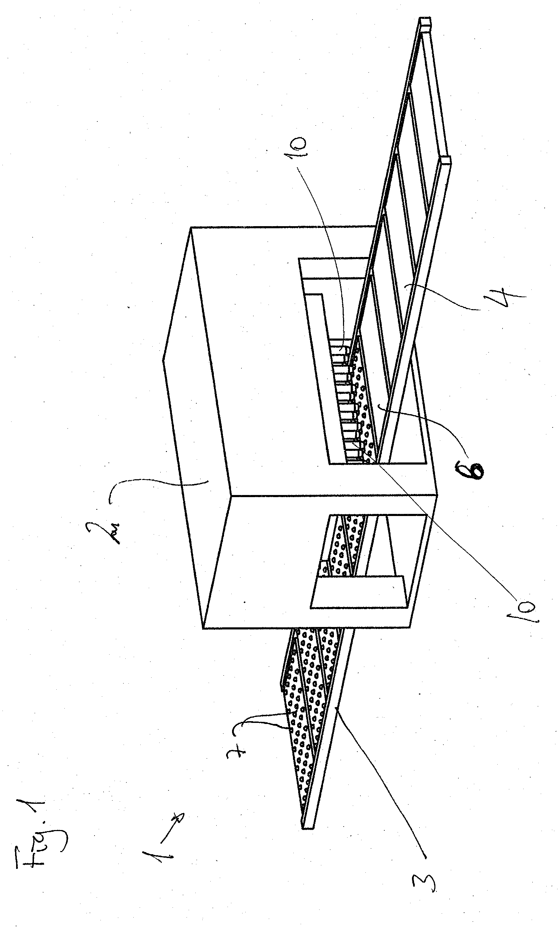

The apparatus 1 according to the invention for making articles of chocolate or chocolate-like mass constitutes part of a chocolate article manufacturing plant. As shown in figure 1 the apparatus comprises a mass depositing section 2.

A continuously moving conveyer 3 extends through the station 2 and carries typically a great number of adjacent plates 4, i.e. fig. 1. Moulding surfaces 5 is then comprised by the upper surfaces 6 of the plates 4 onto which lumps 7 of mass are deposited. The plates 4 may also be substituted by an endless conveyor surface.

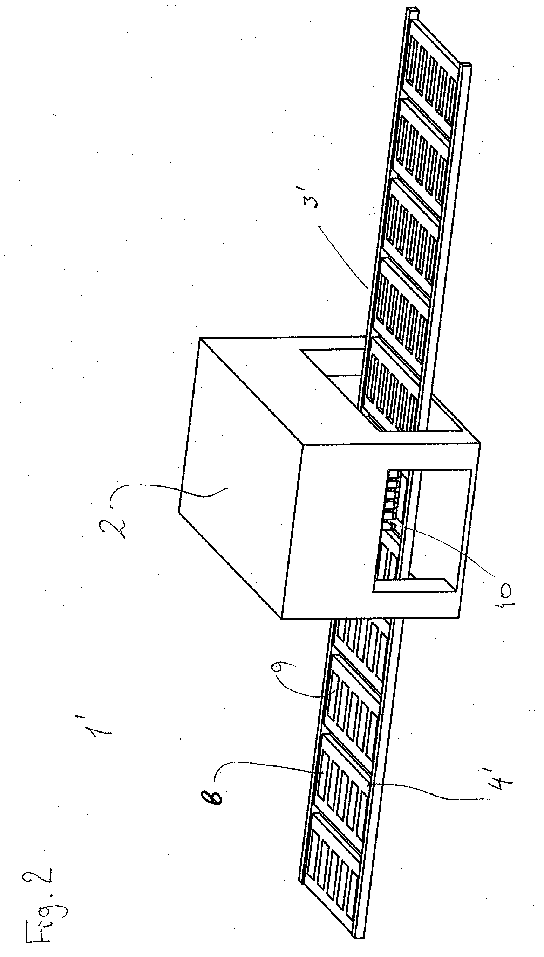

Another embodiment of the apparatus 1' is depicted in figure 2 by which the plates of the conveyor 3' is arranged as mould plates 4' having moulding cavities 8, which then comprises moulding surfaces 9.

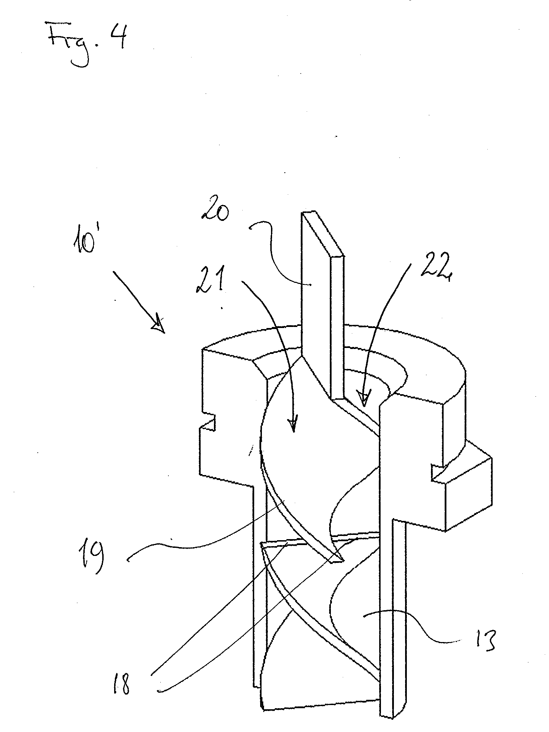

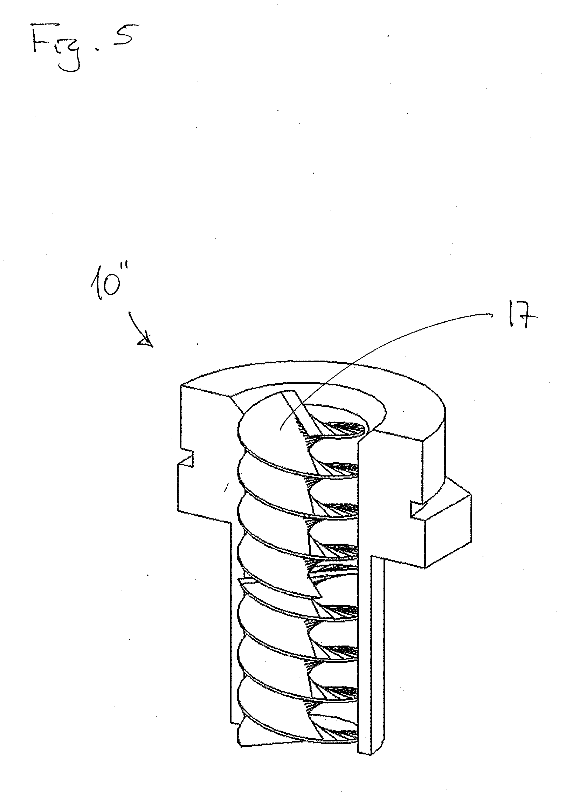

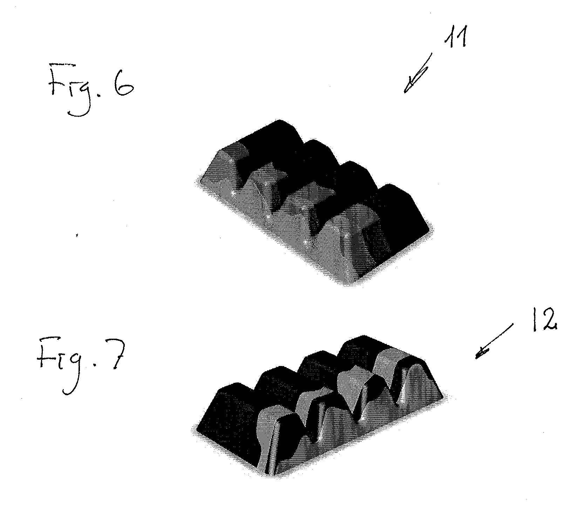

For clarity is only disclosed the part of the conveyor 3 running through the depicted sections 2. Subsequently to the depositing section 2 normally follows a shaking section, and then a cooling tunnel and a wrapping section. This applies for example for the embodiment disclosed in figure 2 by which solid articles such as the tablets 11 and 12 of figures 6 and 7 respectively could be made.

Optionally a pressing or shaping section may also be arranged when the lumps 7 such as disclosed in figure 1 or the mass deposited into the mould cavities 8 of figure 2 is to be pressed into shape by use of plungers or the like.

The schematically disclosed depositor 2 comprises a number of nozzles 10, which deposit mixed mass such as of tempered chocolate and/or other chocolate-like mass in a predetermined volume into the individual mould cavities 8 of each mould plate 4', i.e. figure 2.

The temperature of the mould plates 4 or 4' and consequently of the mould cavities 8 or pressing surfaces 6 is preferably kept around 10-20°C during the depositing.

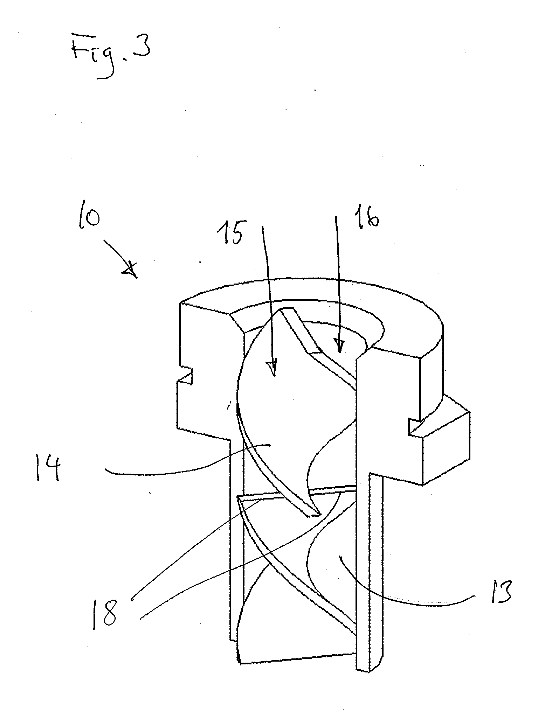

The inventive nozzles 10 comprises a depositing channel 13 into which a worm or screw-shaped insert 14 is arranged, i.e. figure 3. Thereby two separate flowchannels 15, 16 are created as depicted by the arrows 15, 16 of figure 3. The two different masses is then feeded to the nozzle 10 as depicted by the arrows 15 and 16 representing each of the different masses. The masses are then mixed more or less intensively when leaving the nozzle. A "marbled" look of the deposited mass is then created as exhibited by the solid tablets 11 and 12 disclosed in figures 6 and 7 respectively.

The mixing intensity of the insert can typically be raised by changing the pitch of the insert, for example by making the pitch smaller so that more revolutions is available per unit length as exhibited by the worm-shaped insert disclosed by the embodiment 1o" of figure 5 comprising the insert 17.

Also the mixing intensity of the two or more masses running through the nozzle may be raised by arranging incisions 18 in the screw-shaped insert 14 of figure 3. Then the masses is running into each other during the passage of the channel 13. The insert 14 could be arranged so that is free to turn or revolve around its central axis as well, which will also raise the mixing intensity.

The masses to be mixed in the nozzles are typically separately channelled to each nozzle from separate vessels. Especially when only two masses are to be mixed the insert 19 may comprise an upper partitioning wall 20 as depicted by the nozzle 10' of figure 4. Then the upper partitioning wall 20 secures that the masses 21, 22 being feeded from each side of the plate is not being mixed until they are allowed to that - in the channel 13 of the nozzle 10' or when leaving the nozzle. By the embodiment 10' disclosed in figure 4 the masses are being mixed when reaching the incisions 18 of the insert 19.

The marbled appearance of the articles 11 and 12 depicted in figures 6 and 7 are obtained by feeding milk chocolate and dark chocolate to nozzles having the embodiment disclosed in figure 3.

## Claims

1. Apparatus (1, 1') for making articles (11, 12) of chocolate-like mass, in particular chocolate mass, comprising moulding surfaces (4, 9) onto which deposited mass (7, 15, 16, 21, 22) is solidified as well as a depositor (2) with at least one depositing nozzle (10, 10', 10"), which comprises one depositing channel (13), **characterised in, that** a worm or screw-shaped insert (14, 17, 19) is arranged in the depositing channel (13) parting it in at least two separate flow channels for mass (15, 16, 21, 22), and that the one depositing channel (13) is connected with at least two different sources of mass to be deposited.

2. Apparatus according to claim 1, **characterised in, that** the worm or screw-shaped insert (14, 17) is arranged, so that it is free to rotate around its central axis.

3. Apparatus according to claim 1, **characterised in, that** the worm or screw-shaped insert (14, 19) has lateral incisions (18) for intermixing between the at least two sides.

4. Apparatus according to claim 1, **characterised in, that** each of the separate flow channels (21, 22) is connected to each of the separate sources of mass to be deposited.

5. Apparatus according to claim 1, **characterised in, that** the pitch of the worm or screw-shaped insert (14, 19) is determined by between 1 and 2 revolutions in its length.

6. Apparatus according to claim 1, **characterised in, that** the pitch of the worm or screw-shaped insert (17) is determined by between 2 and 10 revolutions in its length.

7. Use of a worm or screw-shaped insert arranged in a depositing channel parting it in at least two separate flow channels, and that the one depositing channel is connected with at least two different sources of chocolate mass to be deposited.
